# EUROPEAN PATENT APPLICATION

(11) **EP 4 727 184 A1**
(43) Date of publication of application: **15.04.2026**
(21) Application number: 23942794.1
(22) Date of filing: 28.06.2023
(51) Int. Cl.: H04W 12/06

(54) **COMMUNICATION METHOD AND APPARATUS**

(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN)
(74) Representative: Gill Jennings & Every LLP
(86) International application number: PCT/CN2023/103261
(87) International publication number: WO 2025/000273

(57) **Abstract**

This application provides a communication method and apparatus. The method includes: receiving a paging message, where the paging message includes a first identifier and a second identifier, the first identifier indicates a target data bearer type in at least two data bearer types, the second identifier indicates a terminal device, the at least two data bearer types include an end-to-end bearer and a multi-node bearer, and each node in the multi-node bearer supports on-path computation on data transmitted on the multi-node bearer; sending a first request message, where the first request message is used to request to perform access, the first request message includes a third identifier, and the third identifier indicates the target bearer type; and setting up, based on the first identifier, a data bearer corresponding to the target data bearer type. According to the foregoing method, a waste of resources caused by setup of a default PDU session is avoided while the terminal device can provide a data service.

## Description

### TECHNICAL FIELD

This application relates to the communication field, and in particular, to a communication method and apparatus.

### BACKGROUND

Data is generated, flowed, and consumed in a communication network. With the development of a network scale, new technologies, applications, and the like, data in the network is increasing and increasingly important. Therefore, a complete service architecture is required for efficient use of data. In the past, data exists in a form of data silos. To be specific, an application uses only its own data and cannot use data of other applications or provide data obtained by the application for other applications. A data service is to break data silos and enable data to be used by internal and external applications of the network as a service, to exert value of the data.

Currently, for information exchange between two network nodes, a protocol data unit (Protocol Data Unit, PDU) session needs to be used to provide an end-to-end user plane connection between a user terminal device and a network, and an intermediate node on this communication path is only responsible for forwarding a data packet, but does not process the data packet. As a result, the terminal cannot provide a data service.

### SUMMARY

This application provides a communication method and apparatus, to avoid a waste of resources caused by setup of a default PDU session, while a terminal device can provide a data service.

According to a first aspect, a communication method is provided. The method may be performed by a terminal device, or may be performed by a chip or a circuit configured in the terminal device. This is not limited in this application. The method includes: receiving a paging message, where the paging message includes a first identifier and a second identifier, the first identifier indicates a target data bearer type in at least two data bearer types, the second identifier indicates the terminal device, the at least two data bearer types include an end-to-end bearer and a multi-node bearer, and each node in the multi-node bearer supports on-path computation on data transmitted on the multi-node bearer; sending a first request message, where the first request message is used to request to perform access, the first request message includes a third identifier, and the third identifier indicates the target bearer type; and setting up, based on the first identifier, a data bearer corresponding to the target data bearer type.

By way of example but not limitation, the end-to-end bearer is a protocol data unit (Protocol Data Unit, PDU) session.

By way of example but not limitation, the multi-node bearer is a data bearer used to bear a data service (Data Service). It should be understood that the data bearer used to bear the data service includes one or more data pipelines, and each node on the data pipeline needs to perform on-path computation/on-path-packet-processing (on-path-packet-processing) on data. In other words, the data bearer used to bear the data service supports conversion and optimization on the data in a forwarding process of the data.

Based on the foregoing solution, after receiving the paging message, the terminal device can determine, based on the first identifier, a type of a target data bearer that needs to be set up, and includes the third identifier in a random access procedure, to notify an access network device and a core network device of the type of the target data bearer that needs to be set up. In this way, a waste of resources caused by setup of a default PDU session is avoided while the terminal device can provide a data service.

With reference to the first aspect, in some implementations of the first aspect, that the first identifier indicates the target data bearer type in the at least two data bearer types includes: The first identifier indicates a paging cause, the paging cause includes voice paging, data paging, and a data service, and the target data bearer type corresponds to the paging cause, where when the paging cause is the data service, the target bearer type is the multi-node bearer.

With reference to the first aspect, in some implementations of the first aspect, that the third identifier indicates the target bearer type includes: The third identifier indicates an access cause, and the access cause corresponds to the paging cause, where when the paging cause is the data service, the access cause is a called data service.

Based on the foregoing solution, a data service option is newly added to the paging cause, so that the terminal device can be prevented from determining a type of a target data bearer that needs to be set up and notifying a RAN and a core network device of the type by using a corresponding access cause. In this way, a waste of resources caused by setup of a default PDU bearer is avoided, and a current message is reused to reduce resource overheads.

With reference to the first aspect, in some implementations of the first aspect, when the target bearer type is the multi-node bearer, setting up, based on the first identifier, the data bearer corresponding to the target data bearer type includes: receiving a second request message, where the second request message is used to request a first data service, the terminal device supports providing of the first data service, and the second request message includes type information of the first data service; receiving a third request message, where the third request message is used to request to set up a first multi-node bearer, and the first multi-node bearer is used to transmit data of the first data service; and setting up the first multi-node bearer based on the type information of the first data service.

With reference to the first aspect, in some implementations of the first aspect, the method further includes: sending a second response message in response to the second request message, where the second response message is used to determine to provide the first data service.

With reference to the first aspect, in some implementations of the first aspect, the method further includes: sending a third response message in response to the third request message, where the third response message is used to determine to setup the first multi-node bearer.

With reference to the first aspect, in some implementations of the first aspect, before receiving the paging message, the method further includes: sending a capability registration message, where the capability registration message indicates a data service capability of the terminal device, and the capability registration message is non-access stratum NAS signaling, or the capability registration message is radio resource control RRC signaling.

It should be understood that the capability registration message includes information such as a data service whose providing can be supported by the terminal device and/or an object that can provide the data service. For example, the data service capability of the terminal device includes one or more of the following: a terminal device identifier, a data collection capability, a data preprocessing capability, a data storage capability, a data reporting capability, a data analysis capability, a data protection capability, a data compression capability, and the like. This is not limited in this embodiment of this application.

It should be understood that, the type information of the first data service corresponds to the data service capability, and includes information such as a data service that the terminal device needs to provide and/or an object that can provide the data service.

It should be understood that, that the terminal device supports providing of the first data service can be understood as that the terminal device has a data service capability of providing the first data service.

It should be understood that, the first data service can be independently provided by one terminal device, or the first data service can be provided by a plurality of terminal devices in collaboration. In other words, the terminal device provides all or a part of the first data service. This is not limited in this embodiment of this application.

It should be noted that the terminal device can be in an idle state or a connected state.

Based on the foregoing solution, the terminal device registers the data service capability of the terminal device with a data control function (Data Controller, DC), so that the DC can allocate the first data service to the terminal device based on the capability of the terminal device and send the request message. Correspondingly, the terminal device can determine and set up the first multi-node bearer based on the type information of the first data service carried in the third request message, to provide the first data service based on the first multi-node bearer.

With reference to the first aspect, in some implementations of the first aspect, the second identifier is a device identifier of the terminal device, or the second identifier is a group identifier of the terminal device.

With reference to the first aspect, in some implementations of the first aspect, when the second identifier is the group identifier of the terminal device, before receiving the paging message, the method further includes: receiving a first message, where the first message includes the second identifier.

Based on the foregoing solution, the second identifier can be the group identifier of the terminal device, and the group identifier is allocated by a DC based on the data service capability of the terminal device, so that the DC can determine, based on the group identifier, that a plurality of terminal devices provide a same data service, and efficiency of providing the data service by the terminal can be improved in a multi-terminal paging manner.

With reference to the first aspect, in some implementations of the first aspect, the second request message includes a fourth identifier, and the fourth identifier is a task identifier of the first data service.

Based on the foregoing solution, the terminal device can provide the data service based on the task identifier of the first data service, to improve accuracy and efficiency of providing the data service by the terminal.

With reference to the first aspect, in some implementations of the first aspect, before receiving the second request message, the method further includes: receiving a second request message, used to request to perform AS encryption; and sending a second response message, indicating that the AS encryption is completed.

According to a second aspect, a communication method is provided. The method includes: receiving a fourth request message, where the fourth request message is used to request at least one first terminal device to provide a first data service, the fourth request message includes a second identifier, and the second identifier indicates the at least one first terminal device; sending a paging message in response to the fourth request message, where the paging message includes a first identifier and the second identifier, the first identifier indicates a target data bearer type in at least two data bearer types, the at least two data bearer types include an end-to-end bearer and a multi-node bearer, and each node in the multi-node bearer supports on-path computation on data transmitted on the multi-node bearer; receiving a first request message, where the first request message is used to request to perform access, the first request message includes a third identifier, and the third identifier indicates the target bearer type; and setting up, based on the first identifier, a data bearer corresponding to the target data bearer type.

It should be understood that the foregoing method can be performed by an access network device (Radio Access Network, RAN) or an access management network element. For example, the access management network element is an access and mobility management function (Access and Mobility Management Function, AMF) network element in a 5G communication system. This is not limited in this embodiment of this application.

It should be understood that the first request message can be a random access request message or a service access request message. For example, the first request message can be a random access request message sent by the terminal device, or the first request message can be a service access request message sent by the RAN to the access management network element. This is not limited in this embodiment of this application.

By way of example but not limitation, the end-to-end bearer is a protocol data unit (Protocol Data Unit, PDU) session.

By way of example but not limitation, the multi-node bearer is a data bearer used to bear a data service (Data Service). It should be understood that the data bearer used to bear the data service includes one or more data pipelines, and each node on the data pipeline needs to perform on-path-packet-processing (on-path-packet-processing) on data. For example, the data bearer used to bear the data service supports conversion and optimization on the data in a forwarding process of the data.

Based on the foregoing solution, after receiving the fourth request message from a data controller DC, the RAN or the access management network element can send the paging message, indicate the target bearer type to the terminal device by using the first identifier, and receive the first request message from the terminal device. Therefore, a waste of resources caused by setup of a default PDU session is avoided while the terminal device can provide a data service.

With reference to the second aspect, in some implementations of the second aspect, that the first identifier indicates the target data bearer type in the at least two data bearer types includes: The first identifier indicates a paging cause, the paging cause includes voice paging, data paging, and a data service, and the target data bearer type corresponds to the paging cause, where when the paging cause is the data service, the target bearer type is the multi-node bearer.

With reference to the second aspect, in some implementations of the second aspect, that the third identifier indicates the target bearer type includes: The third identifier indicates an access cause, and the access cause corresponds to the paging cause, where when the paging cause is the data service, the access cause is a called data service.

Based on the foregoing solution, a data service option is newly added to the paging cause, so that the terminal device can be prevented from determining a type of a target data bearer that needs to be set up and notifying a RAN and a core network device of the type by using a corresponding access cause. In this way, a waste of resources caused by setup of a default PDU bearer is avoided, and a current message is reused to reduce resource overheads.

With reference to the second aspect, in some implementations of the second aspect, when the target bearer type is the multi-node bearer, setting up, by the terminal device based on the first identifier, the data bearer corresponding to the target data bearer type includes: sending a second request message to the at least one first terminal device, where the second request message is used to request the first data service, the second request message includes type information of the first data service, the type information of the first data service is used to set up a first multi-node bearer, and the first multi-node bearer is used to transmit data of the first data service; and receiving a second response message, where the second response message is used to determine to provide the first data service.

Based on the foregoing solution, a RAN or an access management network element sends the second request message to the terminal device, and includes the type information of the first data service in the second request message, to indicate the terminal device to set up the first multi-node bearer used to bear the first data service, so that the terminal device can support providing of a data service.

With reference to the second aspect, in some implementations of the second aspect, before receiving the fourth request message, the method further includes: receiving at least one first capability registration message, where the at least one capability registration message indicates a data service capability of at least one terminal device, the at least one terminal device includes the at least one first terminal device, and the first capability registration message is non-access stratum NAS signaling or radio resource control RRC signaling; and sending at least one second capability registration message to a data control function DC, where the second capability registration message indicates the data service capability of the at least one terminal device.

It should be understood that for related descriptions of the capability registration message, refer to the first aspect. Details are not described herein again.

Based on the foregoing solution, the terminal device can include the capability registration message in the RRC signaling or the NAS signaling, and forward the capability registration message to the data control function DC via a RAN or an access management network element, to register the data service capability of the terminal device with the DC.

With reference to the second aspect, in some implementations of the second aspect, the second identifier is a device identifier of the terminal device, or the second identifier is a group identifier of the terminal device.

With reference to the second aspect, in some implementations of the second aspect, when the second identifier is the group identifier of the terminal device, before receiving the paging message, the method further includes: receiving a first message from the DC, where the first message includes the second identifier; and sending the first message to the at least one first terminal device.

Based on the foregoing solution, the second identifier can be the group identifier of the terminal device, and the group identifier is allocated by the DC based on the data service capability of the terminal device, so that the DC can determine, based on the group identifier, that a plurality of terminal devices provide a same data service, and support a RAN or an AMF in improving, in a multi-terminal paging manner, efficiency of providing a data service by the terminal.

With reference to the second aspect, in some implementations of the second aspect, when the second identifier is the group identifier of the first terminal device, the fourth request message includes a fifth identifier, and the fifth identifier indicates a quantity of the at least one first terminal device.

With reference to the second aspect, in some implementations of the second aspect, the method further includes: performing one of the following operations based on the fifth identifier and a quantity of terminal devices that complete access: sending a first response message, where the first response message is used to reject the access; when the fourth request message is received by an access network device RAN, sending, by the RAN, a fifth request message, where the fifth request message is used to request service access, and the fifth request message includes the third identifier; and when the fourth request message is received by an access management network element, performing, by the access management network element, the access.

It should be understood that the first response message is sent when the quantity of terminal devices that complete access is greater than or equal to the quantity of first terminal devices indicated by the fifth identifier.

It should be understood that, when the quantity of terminal devices that complete access is less than the quantity of first terminal devices indicated by the fifth identifier, the RAN device sends the fifth request message, or the access management network element performs the access.

Based on the foregoing method, the RAN or the access management network element can determine, based on a quantity of first terminal devices that need to provide the first data service, whether to allow the terminal device to perform access, to improve efficiency and flexibility of providing a data service by the terminal device.

With reference to the second aspect, in some implementations of the second aspect, the method further includes: starting a timer when sending the paging message; and if the paging message expires, determining, based on a quantity of first terminal devices that determine to provide the first data service and the quantity of the at least one first terminal device, whether to resend the paging message.

Based on the foregoing solution, the RAN or the access management network element starts the timer when sending the paging message, and after receiving the first response message of the terminal device, determines, based on whether the timer expires, a quantity of terminal devices that complete access, and the quantity of the at least one terminal device indicated by the fifth identifier, whether to resend the paging message to the at least one terminal device, to improve efficiency and flexibility of providing a data service by the terminal device.

With reference to the second aspect, in some implementations of the second aspect, the fourth request message includes a fourth identifier, and the fourth identifier is a task identifier of the first data service.

Based on the foregoing solution, the DC can allocate a task identifier to each data service, so that the terminal device can provide a data service based on the task identifier of the first data service, to improve accuracy and efficiency of providing the data service by the terminal.

According to a third aspect, a communication method is provided. The method includes: A data control network element receives a sixth request message, where the sixth request message is used to request a first data service; the data control network element determines at least one first terminal device based on the sixth request message and locally stored capability information, where the locally stored capability information includes a data service capability of at least one terminal device, and each first terminal device supports providing of the first data service; and the data control network element sends a fourth request message, where the fourth request message is used to request the at least one first terminal device to provide the first data service, the fourth request message includes a second identifier, and the second identifier indicates the at least one first terminal device.

It should be understood that the foregoing solution can be performed by a data control function DC, and the DC can be deployed on an access network device side, or the DC can be deployed on a core network device side. This is not limited in this embodiment of this application.

Based on the foregoing solution, the data control function DC can determine, based on the locally stored data service capability of the terminal device and a data service requested by a consumer, a terminal device that can provide the data service, and send a data service request message to the corresponding terminal device, to support the terminal in providing the data service.

With reference to the third aspect, in some implementations of the third aspect, before receiving the fourth request message, the method further includes: receiving and storing at least one capability registration message, where the at least one capability registration message indicates the data service capability of the at least one terminal device.

It should be understood that the capability registration information includes information such as a data service whose providing can be supported by the terminal device and/or an object that can provide the data service. For example, the data service capability of the terminal device includes one or more of the following: a terminal device identifier, a data collection capability, a data preprocessing capability, a data storage capability, a data reporting capability, a data analysis capability, a data protection capability, a data compression capability, and the like. This is not limited in this application.

Based on the foregoing solution, a DC can receive and store the data service capability of the terminal device, so that after receiving a data service request of a consumer, the DC can determine, based on the locally stored capability information, a terminal device that determines to provide a data service, to support the terminal in providing the data service.

With reference to the third aspect, in some implementations of the third aspect, the second identifier is a device identifier of the first terminal device, or the second identifier is a group identifier of the first terminal device.

With reference to the third aspect, in some implementations of the third aspect, the method further includes: allocating the second identifier to each first terminal device based on the data service capability of the at least one terminal device; and sending a first message, where the first message includes the second identifier.

It should be understood that a DC can allocate at least one group identifier to each terminal device based on the locally stored capability information and a data service capability of each of the at least one terminal device. The at least one group identifier is in one-to-one correspondence with at least one data service capability, that is, each group identifier indicates one data service capability.

It should be understood that terminal devices having a same group identifier have at least a data service capability indicated by the group identifier.

Based on the foregoing solution, the second identifier can be the group identifier of the terminal device, and the group identifier is allocated by the DC based on the data service capability of the terminal device, so that the DC can determine, based on the group identifier, that a plurality of terminal devices provide a same data service, to improve efficiency of providing a data service by the terminal.

With reference to the third aspect, in some implementations of the third aspect, when the second identifier is the group identifier of the first terminal device, the method further includes: including a fifth identifier in the fourth request message based on a type identifier and the locally stored capability information, where the fifth identifier indicates a quantity of the at least one first terminal device.

Based on the foregoing solution, when determining a task in which a plurality of terminal devices need to provide a same data service, a DC includes, in the fourth request message, the fifth identifier indicating a quantity of the terminal devices, to explicitly indicate a quantity of terminals that need to set up data bearers, so as to prevent terminal devices whose quantity exceeds the specified quantity from providing the data service, and improve efficiency of providing the data service by the terminal devices.

With reference to the third aspect, in some implementations of the third aspect, the fourth request message includes a fourth identifier, and the fourth identifier is a task identifier of the first data service.

Based on the foregoing solution, a DC can allocate a task identifier to each data service, so that the terminal device can provide a data service based on the task identifier of the first data service, to improve accuracy and efficiency of providing the data service by the terminal.

According to a fourth aspect, a communication apparatus is provided. The apparatus includes a transceiver unit and a processing unit. The transceiver unit is configured to receive a paging message, where the paging message includes a first identifier and a second identifier, the first identifier indicates a target data bearer type in at least two data bearer types, the second identifier indicates a terminal device, the at least two data bearer types include an end-to-end bearer and a multi-node bearer, and each node in the multi-node bearer supports on-path computation on data transmitted on the multi-node bearer. The transceiver unit is further configured to send a first request message, where the first request message is used to request to perform access, the first request message includes a third identifier, and the third identifier indicates the target bearer type. The processing unit is configured to set up, based on the first identifier, a data bearer corresponding to the target data bearer type.

It should be understood that, the fourth aspect is an implementation on an apparatus side corresponding to the first aspect. Supplements, explanations, and descriptions of beneficial effects of the first aspect are also applicable to the fourth aspect. Details are not described again.

According to a fifth aspect, a communication apparatus is provided. The apparatus includes a transceiver unit and a processing unit. The transceiver unit is configured to receive a fourth request message, where the fourth request message is used to request at least one first terminal device to provide a first data service, the fourth request message includes a second identifier, and the second identifier indicates the at least one first terminal device. The transceiver unit is further configured to: send a paging message in response to the fourth request message, where the paging message includes a first identifier and the second identifier, the first identifier indicates a target data bearer type in at least two data bearer types, the at least two data bearer types include an end-to-end bearer and a multi-node bearer, and each node in the multi-node bearer supports on-path computation on data transmitted on the multi-node bearer; and receive a first request message, where the first request message is used to request to perform access, the first request message includes a third identifier, and the third identifier indicates the target bearer type. The processing unit is configured to set up, based on the first identifier, a data bearer corresponding to the target data bearer type.

It should be understood that, the fifth aspect is an implementation on an apparatus side corresponding to the first aspect. Supplements, explanations, and descriptions of beneficial effects of the second aspect are also applicable to the fifth aspect. Details are not described again.

According to a sixth aspect, a communication apparatus is provided. The apparatus includes a transceiver unit and a processing unit. The transceiver unit is configured to receive a sixth request message from a service request network element, where the sixth request message is used to request a first data service. The processing unit is configured to determine at least one first terminal device based on the sixth request message and locally stored capability information, where the locally stored capability information includes a data service capability of at least one terminal device, and each first terminal device supports providing of the first data service. The transceiver unit is further configured to send a fourth request message, where the fourth request message is used to request the at least one first terminal device to provide the first data service, the fourth request message includes a second identifier, and the second identifier indicates the at least one first terminal device.

It should be understood that, the sixth aspect is an implementation on an apparatus side corresponding to the third aspect. Supplements, explanations, and descriptions of beneficial effects of the third aspect are also applicable to the sixth aspect. Details are not described again.

According to a seventh aspect, a communication apparatus is provided. The apparatus includes a processor. The processor is coupled to a memory, and may be configured to execute instructions in the memory, to implement the method according to any one of the first aspect to the third aspect and any possible implementation of the first aspect to the third aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first communication apparatus. The first communication apparatus may be a functional network element in a network, may be a chip or a circuit in a terminal device, an access network device, or a core network device, or may be a logical module or software that can implement all or some functions of the terminal device, the access network device, or the core network device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a communication apparatus is provided. The apparatus includes a logic circuit and an input/output interface. The logic circuit is coupled to the input/output interface, and is configured to transmit data through the input/output interface, to perform the method according to any one of the first aspect to the third aspect and any possible implementation of the first aspect to the third aspect.

According to a ninth aspect, a communication system is provided. The system includes the communication apparatus according to any one of the fourth aspect to the sixth aspect.

According to a tenth aspect, a computer-readable storage medium is provided. The computer-readable storage medium stores a computer program (which may also be referred to as code or instructions), and when the computer program is executed on a computer, the computer is caused to perform the method according to any one of the first aspect to the third aspect and any possible implementation of the first aspect to the third aspect.

According to an eleventh aspect, a computer program product is provided. The computer program product includes a computer program (which may also be referred to as code or instructions), and when the computer program is executed, a computer is caused to perform the method according to any one of the first aspect to the third aspect and any possible implementation of the first aspect to the third aspect.

According to a twelfth aspect, a communication apparatus is provided. The communication apparatus includes a function or a module configured to perform the method according to any one of the first aspect to the third aspect and any possible implementation of the first aspect to the third aspect.

### BRIEF DESCRIPTION OF DRAWINGS

FIG. 1 is a diagram of an architecture of a communication system according to an embodiment of this application;
FIG. 2 is a block diagram of a communication protocol stack;
FIG. 3 is a diagram of functions of a data service architecture according to an embodiment of this application;
FIG. 4 is a diagram of an initial access procedure of a terminal;
FIG. 5 is a diagram of a method 100 for providing a data service by a terminal according to an embodiment of this application;
FIG. 6 is a diagram of a method 200 for providing a data service by a terminal according to an embodiment of this application;
FIG. 7 is a diagram of a method 300 for providing a data service by a terminal according to an embodiment of this application;
FIG. 8 is a diagram of a method 400 for providing a data service by a terminal according to an embodiment of this application;
FIG. 9 is a diagram of a method 500 for providing a data service by a terminal according to an embodiment of this application;
FIG. 10 is a block diagram of a communication apparatus according to an embodiment of this application;
FIG. 11 is a diagram of a structure of a communication apparatus according to an embodiment of this application; and
FIG. 12 is a diagram of a structure of another communication apparatus according to an embodiment of this application.

### DESCRIPTION OF EMBODIMENTS

The following describes technical solutions of this application with reference to accompanying drawings.

It should be understood that a network architecture and a service scenario described in embodiments of this application are intended to describe the technical solutions in embodiments of this application more clearly, and do not constitute a limitation on the technical solutions provided in embodiments of this application. A person of ordinary skill in the art may know that the technical solutions provided in embodiments of this application are also applicable to similar technical problems with evolution of the network architecture and emergence of new service scenarios.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an Internet of Vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, a future communication system like a 6th generation (6th generation, 6G) mobile communication system, and the like.

In embodiments of this application, an access network device may be any communication device that has a wireless transceiver function and that is configured to communicate with a terminal device. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB, HeNB, or a home NodeB, HNB), a next generation base station in a 6th generation (6th generation, 6G) mobile communication system, an access network device or a module of an access network device in an open access network (open RAN, ORAN) system, a base station in a future mobile communication system or an access node in a Wi-Fi system, a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, may be a gNB in 5G, for example, an NR system, a transmission point (TRP or TP), or one antenna panel or a group of antenna panels (including a plurality of antenna panels) of a base station in a 5G system, may be a network node that forms a gNB or a transmission point, for example, a baseband unit (BBU) or a distributed unit (distributed unit, DU), or may be a satellite, an uncrewed aerial vehicle, or the like.

The terminal device in embodiments of this application is a terminal that accesses a communication system and has a wireless transceiver function, or a chip or a chip system that may be disposed in the terminal. In this application, the terminal device may also be referred to as a terminal, a user equipment (user equipment, UE), an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), an uncrewed aerial vehicle, a computer having a wireless transceiver function, customer premise equipment (customer premise equipment, CPE), a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device, vehicle-mounted device, wearable device, or uncrewed aerial vehicle connected to a wireless modem, a terminal in a 5G network, a terminal in a future evolved network, or the like.

For another example, the terminal device in this application may be an express delivery terminal (for example, a device that can monitor a location of a cargo vehicle, or a device that can monitor a temperature and humidity of a cargo) in intelligent logistics, a wireless terminal (for example, a wearable device that can acquire related data of poultry and livestock) in intelligent agriculture, a wireless terminal (for example, a smart elevator, a fire monitoring device, or a smart meter) in an intelligent building, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be a vehicle-mounted module, a vehicle-mounted assembly, a vehicle-mounted component, a vehicle-mounted chip, or a vehicle-mounted unit built in a vehicle as one or more components or units, and the vehicle can implement the method in this application through the built-in vehicle-mounted module, vehicle-mounted assembly, vehicle-mounted component, vehicle-mounted chip, or vehicle-mounted unit.

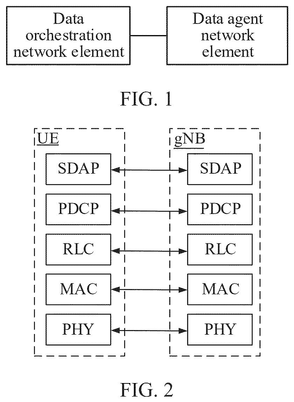

For ease of understanding embodiments of this application, a communication system shown in FIG. 1 is first used as an example to describe in detail a communication system applicable to embodiments of this application. FIG. 1 is a diagram of an architecture of a communication system to which a communication method according to an embodiment of this application is applicable.

As shown in FIG. 1, the communication system includes a data orchestration (data orchestration, DO) network element and a data agent (data agent, DA) network element. There may be one or more data orchestration network elements, and there may be one or more data agent network elements.

It should be noted that the network element may be a logical entity or a physical entity. In embodiments of this application, a "device" and a "network element" may be used interchangeably for description. This is uniformly described herein, and details are not described below again.

The data orchestration network element may obtain a service request, translate the service request into service requirements on data, determine data agent network elements for implementing the service requirements, and orchestrate functions of the data agent network elements, so that the data agent network elements perform corresponding operations and set up a dynamic logical network topology, to implement the corresponding service requirements.

It should be understood that the data orchestration network element may be deployed in any core network (core network, CN) device, transport network (transport network, TN) device, or access network (radio access network, RAN) device, or another device/network element (for example, an operation, administration, and maintenance (operation, administration, and maintenance, OAM) network element), or the data orchestration network element may be independently deployed. For example, the data orchestration network element may be hierarchically deployed on a CN or RAN device side. The data orchestration network element may be deployed in a network service (network service, NS) network element. For another example, the data orchestration network element may be independently deployed in a network as a network function (network function, NF) or a network element. During actual deployment, one or more NFs may form one network element.

The data agent network element may implement one or more of the following functions: data collection, preprocessing, storage, analysis, data protection, and the like. Different data agent network elements may have a same data service capability or different data service capabilities, and may implement a same function or different functions. The data agent network element may interact with the data orchestration network element, to obtain a related operation that needs to be performed to meet a service requirement, and perform the operation. The data agent network elements may set up a logical network topology to form a dynamic data pipeline (data pipeline) (or referred to as a data flow, service logic, a function chain, an operation chain, or the like). The data pipeline includes the functions corresponding to the one or more data agent network elements based on the service requirements, and an output of a former function is an input of a latter function, to implement a corresponding data service.

It should be understood that FIG. 1 is merely a simplified diagram of an example for ease of understanding. The communication system may further include another device, for example, a trust anchor agent (trust anchor agent, TAA), a service request network element, and/or a data storage network element (for a specific implementation, refer to the following corresponding descriptions in FIG. 2). The another device is not shown in FIG. 1.

The data agent network element may be deployed in any core network device, transport network device, terminal device, or access network device, or another device/network element, or the data agent network element may be independently deployed. For example, the data agent network element may be independently deployed in a network as a network function NF or a network element.

Optionally, the data agent network element may be optionally deployed in any core network device, transport network device, terminal device, or access network device, or another network element based on a resource and/or a capability of the network element, to implement cross-domain data collection. The data agent network element may collect data from a full domain, to implement cross-domain data management and collaboration.

When there are a plurality of data agent network elements in the communication system, some data agent network elements may be built in a network device (which is any core network device, terminal device, or access network device, or another network element), and some data agent network elements are independently deployed; the plurality of data agent network elements are all built in a network device; or the plurality of data agent network elements are all independently deployed. This is not limited in this application.

It should be noted that the data orchestration network element may be a logical entity or a physical entity, and the data agent network element may be a logical entity or a physical entity. This is not limited in this application.

The core network device is located on a network side of the communication system, and may be configured to provide a network service for the access network device, the terminal device, and the like. The core network device may include but is not limited to one or more of the following: a mobility management network element, a session management network element, a user plane network element, a policy control network element, a network exposure network element, and an application network element. The user plane network element (User Plane Function, UPF) is a user plane network element in an SBA architecture of a 5G network, and is responsible for all basic user plane functions, including packet routing and forwarding, policy implementation, traffic reporting, QoS handling, and the like. Main functions of the UPF are as follows (refer to 3GPP TS 23.501):
- anchor point for intra-/inter-system mobility;
- external protocol data unit (Protocol Data Unit, PDU) session point connected to a data network;
- packet routing and forwarding;
- user plane part of policy rule enforcement and data packet inspection;
- traffic usage reporting;
- support of an uplink classifier to route traffic flows to a data network;
- support of a branching point to support a multi-homed PDU session;
- QoS handling for a user plane, for example, packet filtering, gating control, and UL/DL rate enforcement;
- uplink traffic verification (SDF to QoS flow mapping); and
- downlink packet buffering and downlink data notification triggering.

Communication between the access network device and the terminal device may comply with a specific protocol layer structure. For example, the protocol layer structure may include a control plane protocol layer structure and a user plane protocol layer structure. For example, the control plane protocol layer structure may include at least one of the following: a radio resource control (radio resource control, RRC) layer, a packet data convergence protocol (packet data convergence protocol, PDCP) layer, a radio link control (radio link control, RLC) layer, a media access control (media access control, MAC) layer, a physical (physical, PHY) layer, or the like. For example, the user plane protocol layer structure may include at least one of the following: a service data adaptation protocol (service data adaptation protocol, SDAP) layer, a PDCP layer, an RLC layer, a MAC layer, a physical layer, or the like. FIG. 2 shows a user plane protocol stack, which may be applicable to the communication system shown in FIG. 1. The protocol stack may be applied to a terminal device or an access network device. The user plane protocol stack includes the following content:
a service data adaptation protocol SDAP layer, a packet data convergence protocol PDCP layer, a radio link control RLC layer, a media access control MAC layer, and a physical PHY layer.

The SDAP layer is located above the PDCP layer, is for bearing user plane data, is responsible for mapping between a quality of service (Quality of Service, QoS) flow and a data radio bearer (Data Radio Bearer, DRB), and adds a QFI (QoS flow ID) mark to a data packet.

Main functions of the PDCP layer are as follows:
(1) user-plane header compression (where a compression algorithm is determined by both a mobile phone and a base station);
(2) encryption/decryption (control plane/user plane);
(3) control-plane integrity check;
(4) sorting and replication detection; and
(5) in an Option3X architecture in NSA networking, a PDCP of a gNodeB performs data splitting and provides a routing function.

The RLC layer is located below the PDCP layer. Entities are classified into a TM entity, a UM entity, and an AM entity. AM data transmission and reception share one entity, and transmission and reception entities of both the UM and the TM are separated. Main functions are as follows:
(1) transparent mode (Transparent Mode, TM) (a broadcast message), unacknowledged mode (Unacknowledged Mode, UM) (a voice service with a delay requirement), and acknowledged mode (Acknowledged Mode, AM) (a common service with high accuracy);
(2) fragmentation and reassembly (UM/AM, a size of a fragmented data packet is determined by the MAC, and is larger in a better radio environment and is smaller in a poorer radio environment); and
(3) error correction (high accuracy for AM and ARQ).

Main functions of the MAC layer are scheduling, including resource scheduling, mapping between logical channels and transport channels, multiplexing/demultiplexing, and hybrid automatic repeat request (Hybrid Automatic Repeat reQuest, HARQ) (uplink and downlink asynchronization).

Main functions of the PHY layer are error detection, forward error correction (Forward Error Correction, FEC) encryption and decryption, rate matching, physical channel mapping, modulation and demodulation, frequency synchronization and time synchronization, radio measurement, and MIMO processing.

A conventional session-oriented network is mainly for bearing a session. That is, information exchange between two communication nodes mainly occurs between humans and between humans and machines. The session is set up based on setup of a communication path. A node on the path is only responsible for forwarding a session packet, and does not process the packet. Specifically, forwarding is performed based on a destination address route of the packet. With generation and consumption of massive data in the future, data-oriented networks are increasingly required. For example, massive data (such as AI data and sensing data) needs to be borne in data pipelines that are formed by functions such as network acquisition, processing, transmission, storage, and analysis. A large amount of data is generated by machines/algorithms and consumed by machines/algorithms. Setup of the data pipeline also depends on setup of a communication path of an underlying network. However, each node on the data pipeline needs to perform corresponding processing (on-path-packet-processing) on a packet, and then forward the packet to a next node, specifically, forward the packet based on a data service identifier. Differences between session-oriented routing/forwarding and a data-oriented forwarding mechanism are as follows:

In the session-oriented routing/forwarding manner:
- header information used for routing remains unchanged;
- a data valid payload of the packet remains unchanged; and
- there is a point-to-point path.

In the data-oriented forwarding mechanism:
- header information used for routing remains unchanged;
- a data valid payload of the packet is changing (data on-path-packet-processing); and
- there is a flexible topology.

Data is managed and processed in a pipeline form. Data flows in the pipeline, and different functions such as collection, transmission, storage, and processing are implemented between nodes that the data flows through. All network elements in a communication system, such as a terminal, a base station, and a core network, may participate in a data service.

### 2. Data service

A data service means that data is provided as a service product based on a framework of data collection, preprocessing, distribution, release, and analysis. In the 6G era, a requirement for the data service is more urgent, and different from a conventional monolithic data service architecture, a unified data service architecture is required to meet the requirement. Data services of various industry organizations and university labs, such as the third generation partnership project (3rd generation partnership project, 3GPP), the European telecommunications standards institute (European telecommunications standards institute, ETSI), the International Telecommunication Union-Telecommunication Standardization Sector (ITU-T for ITU Telecommunication Standardization Sector, ITU-T), and an open access network (open RAN, ORAN), are analyzed. The existing data services and architectures thereof face the following problems in terms of data types collected from data sources, service cases, and the like.
(1) Types of data that can be collected or acquired are incomplete: A range of a data source of a communication network covers function nodes of a UE side, a RAN side, a TN side, a CN side, and the operation, administration, and maintenance (operation, administration, and maintenance, OAM). The data that can be collected or acquired includes a plurality of types of network data, such as network data like various network statuses and behavior, user subscription data, AI model data, internet of things (internet of things, IoT) data, and the like collected or acquired from the nodes, especially RAN side data and CN side data. In addition, with deep integration of AI and networks and wide development of the internet of things, AI model data and IoT data will also be important data flowing in the network. However, there is no architecture that can implement collection or acquisition of all of the data.
(2) From a perspective of trusted data services, a current data service architecture provides only an authentication function between basic network functions (network function, NF), and cannot support providing of trusted services such as access control, source tracing, and audit on data, especially those that meet end to end (end to end, E2E) trusted service requirements of laws and regulations such as (personal information protection law, PIPL)/(general data protection regulation, GDPR) for data.
(3) Single-domain intelligence: Existing data service architectures are mostly monolithic architectures and deployed in a centralized manner, provide data services only for specific types of data or network domains, and lack capabilities of sensing and orchestrating all-domain data. As a result, agile response and flexible deployment cannot be implemented when new services and new requirements are faced.
(4) Limited sharing capability: In most current data service architectures, data consumers are mostly applications inside a network. However, third parties cannot provide services such as data sharing, exchange, and transaction for data subjects due to a lack of trusted mechanisms such as source tracing/audit.
(5) No E2E data management is available: A communication network is a system project that implements end-edge-pipe-cloud collaboration. Data flows through the communication network, and needs to be processed from data collection, preprocessing, storage, analysis, to distribution. Currently, the monolithic data service architecture lacks full-domain data sensing and cross-domain coordination capabilities, and cannot perform collaborative processing on E2E data from a global perspective or perform global collaboration in a data processing action procedure.
(6) Limited supported application scenarios and cases: The current data service architecture is used only for scenarios such as network optimization and customer experience improvement, and needs to be supported in a predefined manner.
(7) The existing data services and architectures thereof are not suitable for cloud-native and distributed system Kubernetes (K8S for short) environments: With the rapid and wide development of cloud computing and container technologies, IT technologies such as cloud native and containerization are deeply integrated with communication networks. Introduction of a 5G SBA architecture enhances security: (1) SBI encryption, where all traffic between NFs is encrypted; (2) cloud NF instantiation, so that anchoring cannot be performed on one NF; and (3) a K8S NF is formed by a plurality of PODs, where encryption can be performed between the PODs, so that a conventional hard collection manner is not applicable, and built-in soft collection is required.

Based on analysis of data value discovery, technology development trends, and the like, in the 6G era, a requirement for the data service is more urgent, and different from a conventional monolithic data service architecture, a unified data service architecture is required to meet the requirement.

In addition, with reduction of computing and storage costs and emergence of a large quantity of low-delay services and local applications, computing, storage, and intelligent algorithms that depend on the computing and the storage tend to be deployed at a network edge close to a data source, forming a data-centric network architecture. A basic function of a mobile communication network also begins to change from an information transmission pipeline to a data management and control platform. Native sensing and intelligence are two major new capabilities of a 6G network. The native sensing uses a sensor device to detect massive data generated by a network status, a surrounding environment, and user/device behavior. The native intelligence uses technologies such as artificial intelligence (Artificial Intelligence, AI) and digital twin for modeling analysis and automatic decision-making to improve network operation efficiency, improve system performance, or provide data services for intelligent applications.

Based on analysis of various application scenarios and requirements, this application classifies data services that can be provided by a data architecture into eight categories shown in Table 1:

**Table 1: Data service categories**

| Data services provided | Service description |
|---|---|
| Raw data | Input the collected or acquired raw data to applications such as AI |
| Data preprocessing | Preprocessing services such as data cleaning, filtering, aggregation, and fusion |
| Data storage | Provide a centralized or distributed storage service on DA/DSF/DLT |
| Data privacy and security protection | Provide end-to-end data privacy and security protection technologies |
| Data sharing/transaction | Trusted data sharing and transaction |
| Data source tracing | Technically comply with regulatory requirements such as GDPR/PIPL, provide traceable/auditable services, and provide distribution services such as a public key and DID |
| Data analysis | Perform analysis and mining based on AI, ML, and big data to provide intelligent services |
| Data services provided | Service description |
| Data dictionary | Wireless network feature data set 6G network knowledge graph |

As shown in Table 2, a 5G communication network is constructed based on a session, and a user plane of the 5G communication network is for bearing session data. Because "on-path computing" and "any topology" required by a 6G data bearer cannot be supported, the user plane cannot bear a new data type of the 6G network. A 5G user-plane session connection implements information exchange between two communication devices. Specifically, a protocol data unit (protocol data unit, PDU) session provides an end-to-end user-plane connection between a user terminal device and a network. 6G data-plane transmission includes functions such as data collection, preprocessing, forwarding, storage, and analysis. User-plane transmission is for communication connections between humans or between humans and machines, and data processed on a data plane is produced and consumed by machines/algorithms. A 5G user-plane session implements only data packet transmission, while a 6G data-plane transmission network needs to implement on-path computing. In a data pipeline (the communication network is used as a data transmission "pipeline"), data is converted and optimized to achieve states required by data analysis and intelligent applications. In terms of data forwarding behavior, a data packet of a session is forwarded based on a destination address; while in the data pipeline, a data packet is forwarded based on a data service and a data pipeline identifier. Data forwarding based on the 5G user-plane session belongs to a transmission control protocol (transmission control protocol, TCP)/internet protocol (internet protocol, IP) layer, and data forwarding on the data plane belongs to an application layer. In addition, a session-based topology is a point-to-point connection, and the 6G data plane needs to support any topology structure (such as a tree structure required for data distribution and data aggregation). If the existing user plane is used to bear all 6G network data, the data can be started and terminated only at two ends of a PDU session, that is, the UE or the user plane function (user plane functions, UPF). As a result, distributed management and control of sensing data, AI data, network behavior, and status data cannot be met. To systematically cope with data service challenges and resolve a problem that the user plane and a data-driven architecture of an existing mobile network cannot meet requirements of new 6G services and data, an independent data plane is introduced for the 6G network based on data and data services of the 6G mobile communication network. The data plane aims to build a unified and trusted data service framework to provide trusted data services and implement cross-domain and cross-vendor data sharing while meeting regulatory requirements of data regulations.

**Table 2: Comparison between data-plane data bearers of 5G and 6G systems**

| | 5G user-plane data bearer | 6G data-plane data bearer |
|---|---|---|
| Function | A PDU session provides an end-to-end user-plane connection between a user equipment and a network | A distributed data pipeline includes functions such as data collection, preprocessing, forwarding, storage, and analysis |
| Start and termination points | UE and UPF | Any network element and terminal device |
| Data forwarding | A forwarding device forwards only a data packet | On-path computing needs to be implemented: In a data pipeline, data is converted and optimized when being forwarded, to reach a state that the data can be analyzed and applied |
| Forwarding rule | A data packet is forwarded based on a destination address | A data packet is forwarded based on a data service and a data pipeline identifier |
| Topology structure | Point-to-point connection | Any topology |

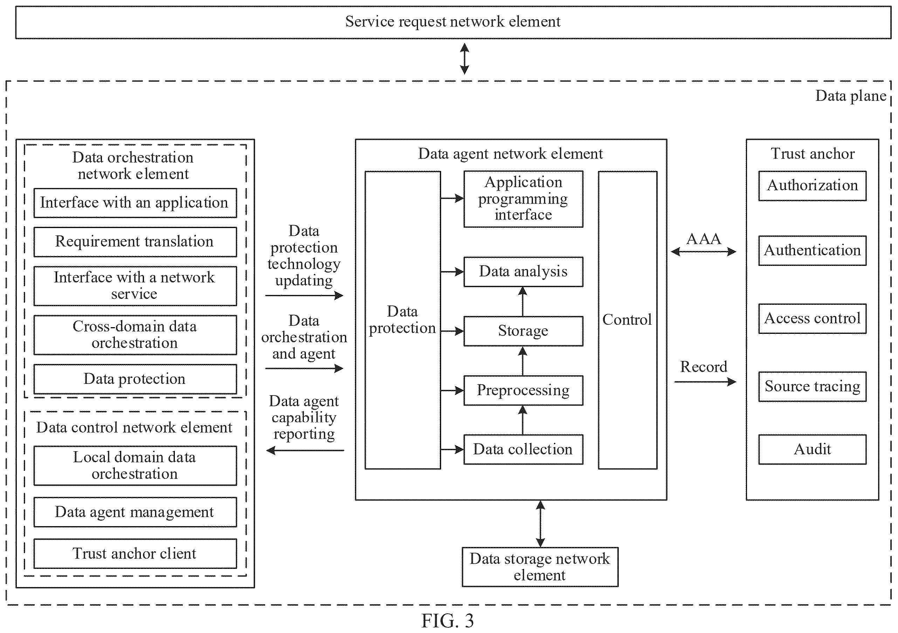

FIG. 3 is a diagram of a data plane architecture of a 6G mobile communication network. The communication system shown in FIG. 1 is applicable to the data plane architecture shown in FIG. 3. As shown in FIG. 3, the data plane architecture mainly includes four functions: a data orchestrator (data orchestrator, DO) and a data controller (data controller, DC), a data agent (data agent, DA), a trust anchor agent (trust anchor agent, TAA), and a data storage function (data storage function, DSF). The DO supports a programmable data pipeline and converts a data service request (constructs a data pipeline based on the data service request). The DA may be built in a network function or deployed independently to perform data collection, data preprocessing, data storage, data analysis, data sharing, and other data services orchestrated in the data pipeline. The TAA is an independent component defined in the data plane architecture to ensure 6G data reliability. During data processing and use, regulatory requirements of regulations such as PIPL/GDPR need to be complied with. If data is subjected to various security and privacy attacks from both internal and external network entities, serious risks may occur. Therefore, the TAA plays an important role in protecting data confidentiality, integrity, and reliability in the 6G network. The DSF functions as a storage extension component of the DA when large-scale data storage or long-term data storage is required.

Based on a real-time requirement and a cross-domain condition of a task, the data orchestrator is classified into two types: a DO and a DC. The DO is responsible for coarse-grained and non-real-time data orchestration, and the DC is responsible for a fine-grained and real-time orchestration task. The DO and the DC collaborate to implement a flexible and programmable data pipeline. The DC can be deployed on a RAN device side or a CN side. The DO mainly provides the following functions: First, the DO is a portal for receiving a data service request and converting the data service request into a combined request for a data pipeline. In addition, the DO collaborates with other network services. For example, a computing power network service orchestrates computing power, and the DO orchestrates data. Based on the data service request and a service capability of the DA, the DO implements cross-domain coarse-grained data pipeline orchestration. In addition, the DO has a built-in data security protection and privacy protection technology repository (data protection technology repository, DPTR), including technologies such as differential privacy, homomorphic encryption, secure multi-party computing, and zero-knowledge proofs, providing data security and privacy protection capabilities, and empowering the DA with a data protection technology (data protection technology, DPT) as required. On the contrary, the DC implements fine-grained DA orchestration. In a local domain, data pipelines are combined based on the DA capabilities and the data service request to implement real-time efficient service management. Second, the DC receives a capability report of the DA, registers and deregisters the DA, and monitors the DA in real time by monitoring a DA heartbeat. In addition, the DC has a built-in trust anchor client (trust anchor client, TAC), to initiate security mechanism requests such as authentication, authorization, and access control to the TAA, and apply for source tracing and audit services for data access.

The DA is optionally deployed on each NF, RAN, TN node terminal, and OAM, while also supporting independent deployment, and sets up dynamic data pipelines (pipeline) including a series of data processing units arranged as required and in sequence, where an output of a previous unit is an input for a next unit. In this way, a data flow that covers data collection, preprocessing, storage, and application/analysis, all of which can be output from the DA as required, is formed, while providing external interfaces for accessing data services.
- The data collection refers to obtaining data from a data source in subscription/notification or request/response manner. A data obtaining request indicates one or more of a trigger manner, a trigger condition, a reporting periodicity, and a data amount of data reporting. Collection of one or more of user data, network data, AI data, and IoT data is supported. Streaming data collection, batch data collection, and real-time and non-real-time data collection are supported.
- The data preprocessing refers to a series of operations performed on collected raw data, such as "cleaning, filling, smoothing, merging, normalization, and consistency check". A purpose is to improve data quality and lay a foundation for subsequent analysis. The raw data usually includes dirty data, such as a data loss, data noise, data redundancy, and data set imbalance.
- Data privacy protection means using technologies such as k-anonymity (k-anonymity), l-diversity (l-diversity), t-closeness, and differential privacy (differential privacy) to process collected data. In this way, malicious attackers cannot directly obtain sensitive information from anonymized data, thereby protecting confidentiality and privacy. The data protection technology may be pre-installed in the DA or pushed by the DO as required to protect data security and privacy at each layer of the DA.
- The data analysis function is loosely coupled with the DA and may be deployed separately from the DA as required. Various data analysis technologies, such as AI/ML, Hive (a data warehouse tool), and Spark (a computing engine), are supported. The data analysis function invokes multi-layer data services of the DA, including data collection, preprocessing, and storage, through an application programming interface (application programming interface, API).

The TAA is an agent of a 6G trusted plane on the data plane, includes trusted functions such as authentication, authorization, access control, audit, and source tracing, and also provides an interface for supporting trusted technologies such as a blockchain to protect confidentiality, integrity, and reliability of all data.

The DSF is responsible for storing data. Information including AI model data, a key performance indicator (key performance indicator, KPI), a log, an alarm, and the like can be stored in the DSF. The DSF supports unified storage for structured/unstructured/semi-structured data, and supports dynamic classification and multi-layer storage of various types of files. The DSF employs the following diverse data storage technologies: A form of the DSF may be a centralized database or a distributed database like a distributed Hash table (distributed Hash table, DHT) or an interplanetary file system (interplanetary file system, IPFS). The DSF supports a plurality of data storage and encryption technologies such as database appearance encryption, transparent data encryption (transparent data encryption, TDE), transparent file encryption (transparent file encryption, TFE), user-defined function (user-defined function, UDF) encryption, and full disk encryption (full disk encryption, FDE).

It should be noted that the solutions in embodiments of this application may alternatively be applied to another communication system, and a corresponding name may alternatively be replaced with a name of a corresponding function in the another communication system.

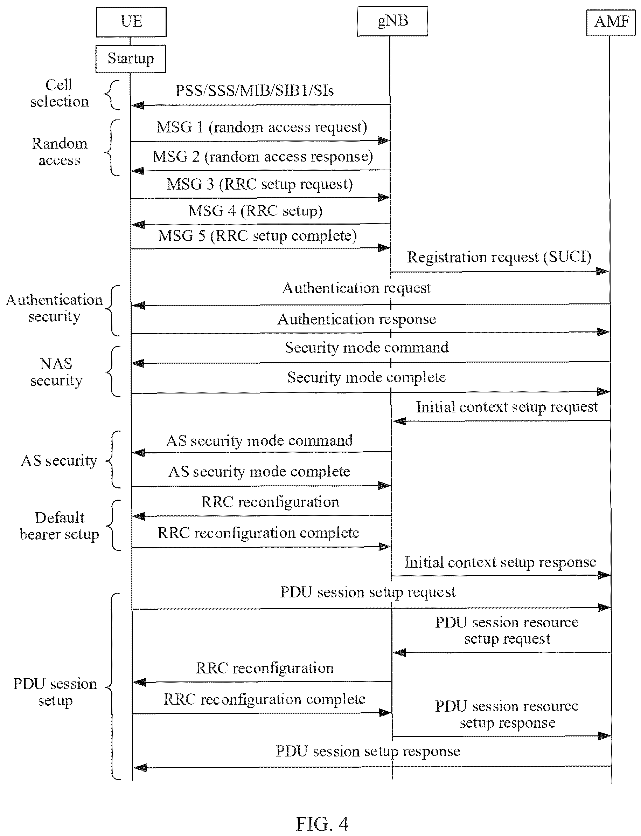

FIG. 4 is a diagram of an initial access procedure of a terminal.

As shown in FIG. 4, after cell selection, random access, security authentication, and default bearer setup, the terminal sets up a PDU session to perform data transmission. Specifically, when the terminal is in an idle state, the terminal passively accesses a network by monitoring a paging message, where a paging cause includes voice paging and data paging. By default, the terminal and a core network side need to set up a PDU session to transmit voice or data traffic.

It can be learned that, because a core of a 5G user plane is to set up a PDU session between a user terminal and a data network, data can be started and terminated only at two ends of the PDU session, to be specific, a user equipment and a user plane function UPF. However, when the terminal provides the foregoing data service, a termination point of a data packet in a data bearer is not the UPF, but is any base station, terminal, or core network element. Therefore, a default PDU session does not need to be set up. Therefore, if an existing user plane is used to bear all 6G network data, there is a problem that data can be terminated only at the user plane function UPF, and distributed management and control of sensing data, AI data, network behavior, and status data cannot be implemented. That is, a current access procedure cannot support a scenario in which the terminal provides the data service.

In view of this, with reference to the foregoing data service architecture, embodiments of this application provide a method for providing a data service by a terminal.

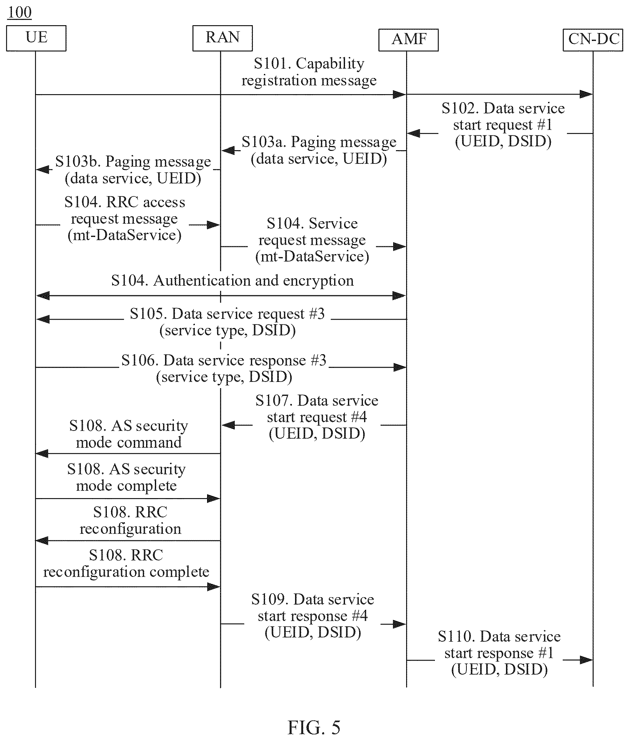

FIG. 5 is a diagram of a method 100 for providing a data service by a terminal according to an embodiment of this application. As shown in FIG. 5, the method 100 includes the following steps.

S101. A terminal device UE sends a capability registration message to a DC, and correspondingly, the DC receives the capability registration message.

It should be understood that the DC can be deployed in any core network (core network, CN) side device or access network (radio access network, RAN) side device. For example, the DC can be deployed in an access management network element of the CN side device. A specific access management network element is not limited in this embodiment of this application. The following uses an example in which the DC is deployed in an access and mobility management network element (Access and Mobility Management Function, AMF) in a 5G communication system in the CN side device for description.

Specifically, the terminal device UE sends the capability registration message to the AMF, and further, the AMF forwards the DA capability registration message to the DC.

It should be understood that the capability registration message includes a data service capability of the terminal device. Specifically, the capability registration message includes information such as a data service that can be provided by the terminal device and/or an object that can provide the data service. For example, the data service capability of the terminal device includes one or more of the following: a terminal device identifier, a data collection capability, a data preprocessing capability, a data storage capability, a data reporting capability, a data analysis capability, a data protection capability, a data compression capability, and the like. This is not limited in this embodiment of this application.

For example, a UE 1 supports providing of raw data only for a UE 2; or a UE 1 supports providing of raw data, data preprocessing, and data storage for a UE 2 and a UE 3. This is not limited in this embodiment of this application.

Optionally, when the DC is deployed on a CN side, the UE includes DA capability information in non-access stratum (Non-Access Stratum, NAS) signaling.

S102. The CN-DC sends a data service start request message #1 to the AMF, and correspondingly, the AMF receives the data service start request message.

Specifically, the CN-DC receives a data service start request message #2 (an example of a sixth request message, which is not shown in the figure) sent by a consumer (or a service request network element), and the data service start request message #2 includes data service type information. Further, the CN-DC determines, from locally stored capability information based on a data service type, a specific UE (an example of a first terminal device) to provide the data service. Then, the CN-DC sends the data service start request message #1 (an example of a fourth request message) to the AMF, to indicate the UE to provide the data service.

In a possible implementation, the data service start request message includes a specific UEID and a data service task identifier (Data service task ID, DSID) (an example of a fourth identifier) requested to be provided.

It should be understood that the DSID is allocated by the CN-DC based on the data service start request message #2.

By way of example but not limitation, if the CN-DC determines, based on the data service start request message #2, that the UE 1 needs to provide a data service #1 (an example of a first data service), the CN-DC includes, in the data service start request message #1, a DSID #1 indicating the data service #1 and a UEID #1 indicating the UE 1.

S103a. The AMF sends a paging message to a RAN, and correspondingly, the RAN receives the paging message.

Specifically, if the AMF finds that the specific UE is not in a connected state, the AMF sends the paging message to the RAN. The paging message carries a paging cause (that is, a first identifier) that is the data service and the UEID (that is, a second identifier) carried in the data service start request message #1.

It should be noted that, in this embodiment of this application, a data service-related option is added to the paging message. To be specific, the paging cause carried in the paging message includes voice paging, data paging, and the data service.

By way of example but not limitation, a format of the paging message is:

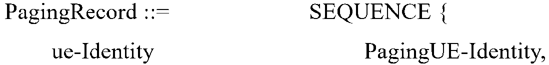

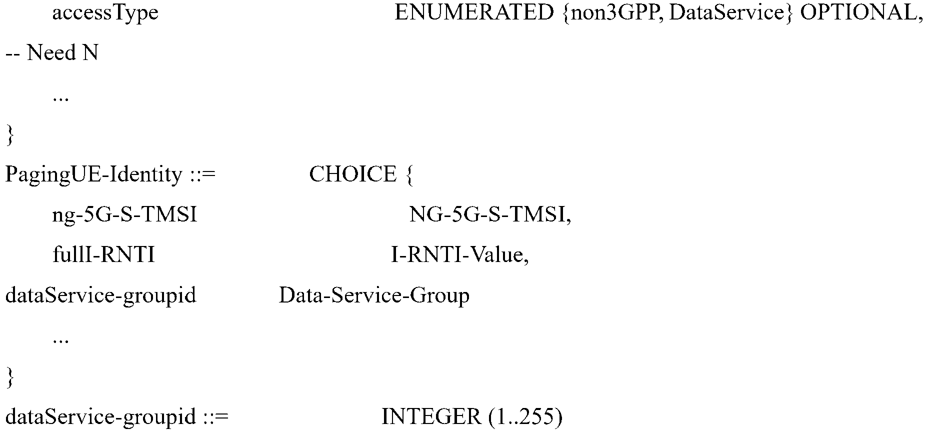

S103b. The RAN sends the paging message to the UE, and correspondingly, the UE receives the paging message.

After receiving the paging message, the UE determines, based on the UEID carried in the paging message, that the paging message is a paging message of the UE, and determines, based on the paging cause, that the paging cause is a called data service. Further, the UE determines, based on the paging cause, a type of a data bearer that needs to be set up by the UE.

In a possible implementation, when the paging cause is the voice paging or the data paging, the UE determines that the UE needs to set up a PDU session to transmit voice or data traffic.

In another possible implementation, when the paging cause is the data service, the UE determines that the UE needs to set up a data bearer (that is, a data-plane data bearer in this specification) used to bear the data service. In other words, the UE determines that the UE does not need to set up a PDU session.

It should be understood that in this embodiment of this application, an example in which the paging cause is the data service is used for description.

S104. The UE initiates random access and performs authentication and encryption.

In a process of initiating random access, the UE can include mt-DataService information (an example of a third identifier) in an RRC access request (RRCSetupRequest) message sent to the RAN, to indicate that an access cause value of the UE is a called data service. Further, the RAN sends, to the AMF, a service request (ServiceRequest) message (an example of a first request message) that carries the mt-DataService information, to perform a service access procedure. After service access is completed, authentication and encryption are completed between the AMF and the UE.

S105. The AMF sends a data service start request message #3 (an example of a second request message) to the UE, and correspondingly, the UE receives the data service request message #3.

Specifically, the AMF includes the DSID and detailed data service type information in the data service start request message #3, where the detailed data service type information includes a type and a target interaction object of the data service. For example, the AMF includes the DSID #1 in the data service request message #3 sent to the UE 1, and related information of the DSID #1 specifically indicates the UE 1 to collect raw data from the UE 2.

Optionally, the data service request message #3 can be carried in NAS signaling.

S106. The UE sends a data service start response message #3 (an example of a second response message) to the AMF, and correspondingly, the AMF receives the data service request response message #3.

Specifically, the UE includes the DSID in the data service start response message #3.

Optionally, the UE further includes the detailed data service type information in the data service start response message #3.

It should be understood that information included by the UE in the data service request response message #3 can be a part or all of the data service start request message #3 received in S105. This is not limited in this application.

S107. The AMF sends a data service start request message #4 to the RAN, and correspondingly, the RAN receives the data service start request message. Specifically, the data service start request message carries the UEID and the DSID.

S108. The RAN starts AS encryption, and sets up a data service bearer.

Specifically, the RAN sends an AS security mode command (AS SecurityModeCommand) message to the UE, and in response, the UE sends an AS SecurityModeComplete message to the RAN, to implement random access between the UE and the RAN. Then, the RAN sends an RRC reconfiguration (RRCReconfigration) message (an example of a third request message) to the UE to request to set up the data service bearer, and in response, the UE sends an RRC reconfiguration complete (RRCReconfigrationComplete) message (an example of a third response message) to the RAN to notify the RAN that the data service bearer is set up.

S109. The RAN sends a data service start response message #4 to the AMF, and correspondingly, the AMF receives the data service start success message #4. Specifically, the data service start success message carries the UEID and the DSID.

S110. The AMF forwards a data service start response message #1 to the CN-DC, and correspondingly, the CN-DC receives the data service start confirm message. Similarly, the data service start confirm message carries the UEID and the DSID.

It should be understood that, after completing the foregoing steps S101 to S110, the UE can provide a corresponding data service based on the data bearer set up in S108.

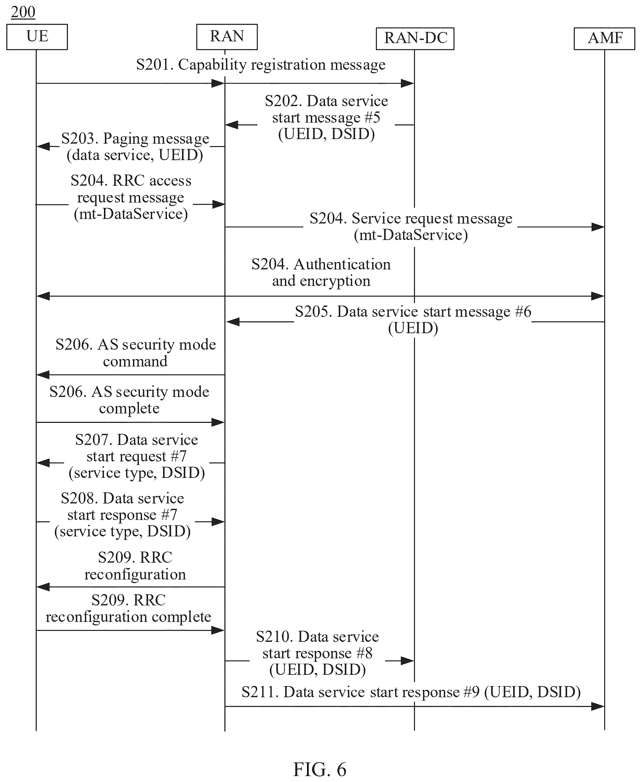

When a DC is deployed on a RAN side, a method 200 for providing a data service by a terminal according to an embodiment of this application is shown in FIG. 6. Specifically, the method 200 includes the following steps.

S201. A UE sends a capability registration message to a DC, and correspondingly, the DC receives the DA capability registration message. For specific descriptions, refer to S101. Details are not described herein again.

Optionally, when the DC is deployed on a RAN side, the UE includes the capability registration message in radio resource control (Radio Resource Control, RRC) signaling.

S202. The RAN-DC sends a data service start request message #5 to a RAN, and correspondingly, the RAN receives the data service start request message #5. For specific descriptions, refer to S102. Details are not described herein again.

In a possible implementation, the data service start request message includes a specific UEID and a DSID of a provided data service.

S203. The RAN sends a paging message to the UE, and correspondingly, the UE receives the paging message.

Specifically, if the RAN finds that the specific UE is not in a connected state, the RAN sends the paging message. The paging message carries a paging cause (that is, a first identifier) that is the data service and the UEID (that is, a second identifier). For a specific format of the paging message, refer to the descriptions in S103a. Details are not described herein again.

S204. The UE initiates random access and performs authentication and encryption. For specific descriptions, refer to S104. Details are not described herein again.

S205. An AMF sends a data service start request message #6 to the RAN, and correspondingly, the RAN receives the data service start request message #6.

Specifically, the data service start request message includes the UEID, so that the RAN can perform subsequent steps based on the UEID.

S206. The RAN starts AS encryption. For a specific procedure, refer to S108. Details are not described herein again.

S207. The RAN sends a data service start request message #7 (an example of a second request message) to the UE, and correspondingly, the UE receives the data service start message.

S208. The UE sends a data service start response message #7 (an example of a second response message) to the RAN, and correspondingly, the RAN receives the data service start response message #7.

For information carried in the data service start request message #7 and the data service start response message #7, refer to the related descriptions in S105 and S106. Details are not described herein again.

Optionally, the data service request message #7 can be carried in RRC signaling.

S209. The UE sets up a data service bearer to the RAN. For a specific process, refer to S108. Details are not described herein again.

S210. The RAN sends a data service start response message #8 to the RAN-DC, and correspondingly, the RAN-DC receives the data service start success message. For specific descriptions, refer to S108. Details are not described herein again.

S211. The RAN sends a data service start success message #9 (an example of a fifth response message) to the AMF, and correspondingly, the AMF receives the data service start success message. Specifically, the data service start success message carries the UEID and the DSID.

Similarly, after completing the foregoing steps S201 to S211, the UE can provide a corresponding data service based on the data bearer set up in S209.

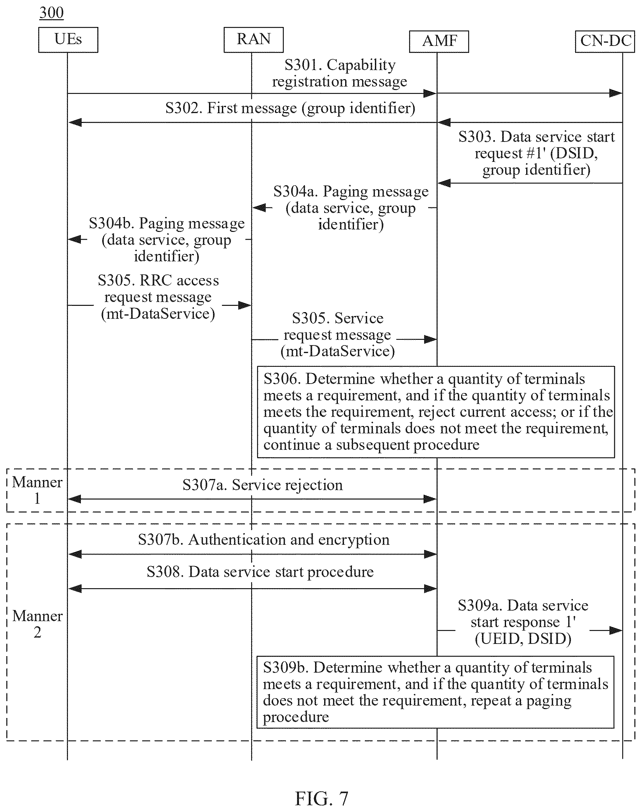

It should be understood that the foregoing solution is applicable to a scenario of paging a single terminal. For a scenario in which a plurality of terminals need to provide a data service corresponding to one DSID, embodiments of this application further provide a method 300 for providing a data service by a terminal. Specifically, the method 300 shown in FIG. 7 includes the following steps.

S301. UEs send capability registration messages to a DC, and correspondingly, the DC receives the capability registration messages. For specific descriptions of the capability registration messages, refer to S101. Details are not described herein again.

Further, the DC groups the UEs based on data service capabilities of the UEs, and allocates data service capability group identifiers (group identifiers for short below, which is an example of a second identifier). Specifically, the DC groups UEs that can provide a same data service into one group, and allocates a data service capability group identifier. For example, if a UE 1 and a UE 3 support providing of data storage, and a UE 2 and a UE 4 support providing of data preprocessing, the DC allocates a group identifier 1 to the UE 1 and the UE 3, and the DC allocates a group identifier 2 to the UE 2 and the UE 4.

In a possible implementation, a same UE can have a plurality of data service capabilities. Further, the DC allocates a plurality of group identifiers to the UE based on the data service capabilities of the UE.

By way of example but not limitation, if a UE 5 supports providing of data storage and data preprocessing, and a UE 6 supports providing of data storage, the DC allocates a group identifier 3 and a group identifier 4 to the UE 5, and allocates the group identifier 3 to the UE 6.

By way of example but not limitation, if a UE 5 supports providing of data storage for a UE 7, and a UE 6 supports providing of data storage for the UE 7 and a UE 8, the DC allocates a group identifier 5 to the UE 5, and allocates the group identifier 5 and a group identifier 6 to the UE 6.

S302. The DC sends a first message to the UEs, and correspondingly, the UEs receive the first message. The first message includes the data service capability group identifiers.

Specifically, when the DC is deployed in a CN side device, the DC sends the data service capability group identifiers to the UEs via an AMF. When the DC is deployed in a RAN side device, the DC sends the data service capability group identifiers to the UEs via a RAN. The following first describes subsequent steps by using an example in which the DC is deployed in the CN side device.

S303. The DC sends a data service start request message #1' to the AMF, and correspondingly, the AMF receives the data service start request message #1'. For specific descriptions, refer to S102. Details are not described herein again.

Optionally, the DC includes, in the data service start request message #1', a quantity (an example of a fourth identifier) indicating UEs that are requested to provide a data service. By way of example but not limitation, if the CN-DC determines, based on a data service start request message #2' sent by a consumer, that UEs whose group identifier is 1 need to provide a data service #2 (an example of a first data service), the CN-DC includes, in the data service start request message #1', a DSID #2 indicating the data service #2, the group identifier 1, and an identifier indicating that five UEs need to provide the data service #2.

S304a. The AMF sends a paging message to the RAN, and correspondingly, the RAN receives the paging message.

Specifically, the AMF includes, in the paging message, a paging cause that is a data service DataService and a group identifier. For a specific format of the paging message, refer to the descriptions in S103a. Details are not described herein again.

Optionally, the AMF starts a timer at a moment of sending the paging message, to determine whether paging time expires.

S304b. The RAN sends the paging message to the UEs, and correspondingly, the UEs receive the paging message.

Specifically, the RAN randomly selects a paging occasion (Paging Occasion, PO) to deliver the paging message. After monitoring the paging message, the UEs compare whether the group identifier in the message is consistent with the group identifier allocated to the UEs, and if the group identifier in the message is consistent with the group identifier allocated to the UEs, perform a subsequent step.

S305. The UEs initiate random access. For a specific process, refer to S104. Details are not described herein again.

S306. The AMF determines, based on whether a quantity of UEs that complete access meets a requirement, whether to allow the UEs to complete the access.

Specifically, after receiving a service request message sent by the RAN, the AMF determines, based on whether the quantity of UEs that complete access meets the requirement, whether to allow the UEs to complete the access. There may be the following two cases based on whether the AMF allows the UEs to perform the access.

### Manner 1:

The AMF determines whether the quantity of UEs that complete access reaches a quantity, determined by the DC, of UEs that are required for providing a service. If the quantity of UEs that complete access reaches the quantity, the AMF rejects current service access and performs the following step. S307a: The AMF sends a service ServiceReject message (that is, a first response message) to the UEs.

By way of example but not limitation, the DC indicates, by using a data service start request message, that five UEs need to provide a data service corresponding to a DSID #1, and all of a UE 1 to a UE 5 have completed random access. In this case, if a UE 6 sends a service request message to the AMF to request to perform random access, the AMF rejects an access request of the UE 6.

### Manner 2:

The AMF determines whether the quantity of UEs that complete access reaches a quantity, determined by the DC, of UEs that are required for providing a service. If the quantity of UEs that complete access does not reach the quantity, the AMF allows access and performs a subsequent procedure.

S307b. The UEs and the AMF complete authentication and encryption.

S308. The UEs perform a data service start procedure. For a specific procedure, refer to S105 to S108. Details are not described herein again.

S311. The RAN sends a data service start success message #4' to the AMF, and correspondingly, the AMF receives the data service start success message #4'. Specifically, the data service start success message #4' carries a UEID and a DSID.

S312a. The AMF sends a data service start success message to the CN-DC, and correspondingly, the AMF receives the data service start success message. Specifically, the data service start success message carries the UEID and the DSID.

S312b. The AMF determines, based on whether the quantity of terminals meets the requirement, whether to repeat a paging procedure.

Specifically, if the quantity of UEs that have completed access reaches the quantity, determined by the DC, of UEs that are required for providing a service, the paging message is no longer sent. If the requirement is not met, the paging procedure in S304 is repeated.

Optionally, after receiving the data service start success message, if the timer set in S304a expires (that is, a timeout period since the paging message is sent last time has been reached), the AMF performs the foregoing determining.

It should be noted that S312a and S312b can be simultaneously performed or separately performed, and an execution sequence is not limited in this embodiment of this application.

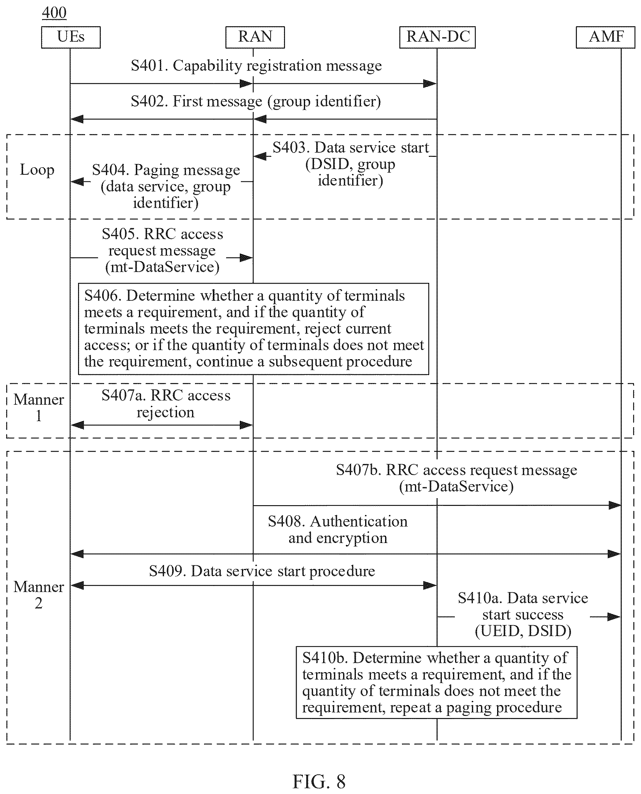

Similarly, in a scenario of paging a plurality of terminals, for a case in which a DC is deployed in a RAN side device, this application further provides a method 400 for providing a data service by a terminal. Specifically, the method 400 shown in FIG. 8 includes the following steps.

S401. UEs send capability registration information to a DC, and correspondingly, the DC receives the capability registration information. For specific descriptions, refer to S101. Details are not described herein again.

S402. The RAN-DC sends a data service capability group identifier to the UEs, and correspondingly, the UEs receive the data service capability group identifier. For specific descriptions, refer to S102 and S402. Details are not described herein again.

S403. The RAN-DC sends a data service start request message #5' to a RAN, and correspondingly, the RAN receives the data service start request message #5'. For specific descriptions, refer to S303. Details are not described herein again.

S404. The RAN sends a paging message to the UEs, and correspondingly, the UEs receive the paging message.

Specifically, the RAN randomly selects a PO to deliver the paging message, and the paging message carries a paging cause that is a data service DataService and a group identifier. For a specific format of the paging message, refer to the descriptions in S103a. Details are not described herein again.

Further, after monitoring the paging message, the UEs compare whether the group identifier in the message is consistent with the group identifier allocated to the UEs, and if the group identifier in the message is consistent with the group identifier allocated to the UEs, perform a subsequent step.

Optionally, the RAN starts a timer at a moment of sending the paging message, to determine whether paging time expires.

S405. The UEs initiate random access. For a specific process, refer to S104. Details are not described herein again.

S406. The RAN determines, based on whether a quantity of UEs that complete access meets a requirement, whether to allow the UEs to complete the access.

There may be the following two cases based on whether the RAN allows the UEs to perform the access.

### Manner 1:

The RAN determines whether the quantity of UEs that complete access reaches a quantity, determined by the DC, of UEs that are required for providing a service. If the quantity of UEs that complete access reaches the quantity, the RAN rejects current access and performs the following step. S407a: The RAN sends an RRCSetupReject message (an example of a first response message) to the UEs.

### Manner 2:

The RAN determines whether the quantity of UEs that complete access reaches a quantity, determined by the DC, of UEs that are required for providing a service. If the quantity of UEs that complete access does not reach the quantity, the RAN performs a subsequent procedure.

S407b. The RAN sends a service access request message (an example of a fifth request message) to an AMF.

Specifically, the random access request message can be a ServiceRequest message, and a called cause carried in the random access request message is a data service. For example, the called cause is mt-DataService.

S408. The UEs and the AMF complete authentication and encryption.

S409. The UEs perform a data service start procedure. For a specific procedure, refer to S105 to S108. Details are not described herein again.

S410a. The RAN sends a data service start success message to the RAN-DC, and correspondingly, the RAN-DC receives the data service start success message. Specifically, the data service start success message carries a UEID and a DSID.

S410b. The RAN determines, based on whether the quantity of terminals meets the requirement, whether to repeat a paging procedure.

Specifically, if the quantity of UEs that have completed access reaches the quantity, determined by the DC, of UEs that are required for providing a service, the paging message is no longer sent. If the requirement is not met, the paging procedure in S404 is repeated.

Optionally, if the timer set in S304a expires (that is, a timeout period since the paging message is sent last time has been reached), the RAN performs the foregoing determining.

It should be noted that S410a and S410b can be simultaneously performed or separately performed, and an execution sequence of S410a and S410b is not limited in this embodiment of this application.

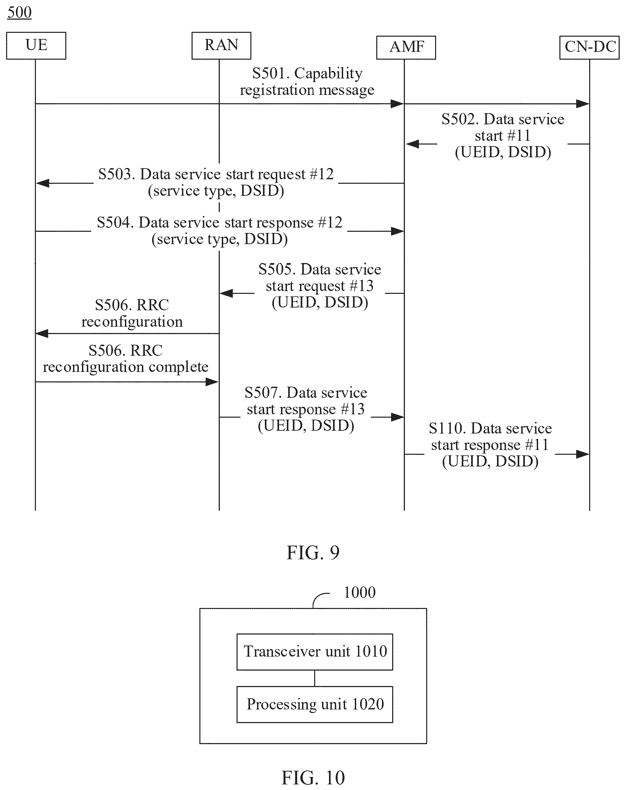

It should be understood that the data service start procedures in the foregoing methods 100 to 400 are further applicable to a scenario in which a UE is in a connected state. For the scenario in which the UE is in the connected state, the following uses an example in which a DC is deployed on an AMF side for description. Specifically, a method 500 shown in FIG. 9 includes the following steps.

S501. A UE sends a DA capability registration message to a DC, and correspondingly, the DC receives the DA capability registration message.

S502. The DC sends a data service start request message #11 (an example of a sixth request message) to an AMF, and correspondingly, the AMF receives the data service start request message #11.

S503. The AMF sends a data service start request message #12 (an example of a second request message) to the UE, and correspondingly, the UE receives the data service start request message #12.

S504. The UE sends a data service start request response message #12 (an example of a second response message) to the AMF, and correspondingly, the AMF receives the data service start request response message #12.

S505. The AMF sends a data service start request message #13 to a RAN.

S506. The RAN sends a data service start response message #13 to the AMF, and correspondingly, the AMF receives the data service start success message #13. Specifically, the data service start success message carries a UEID and a DSID.

S507. The AMF forwards a data service start response message #11 (an example of a fourth response message) to the CN-DC, and correspondingly, the CN-DC receives the data service start confirm message #11. Similarly, the data service start confirm message carries the UEID and the DSID.

It should be understood that a sequence of the steps in embodiments of this application is determined based on internal logic of the method. The foregoing sequence numbers are merely examples, and do not limit the sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be noted that the execution body in the foregoing embodiments is merely an example, and the execution body may alternatively be a chip, a chip system, or a processor that supports the execution body in implementing the method. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by a base station may alternatively be implemented by a component (for example, a chip or a circuit) in the base station, and methods and operations implemented by a UE may alternatively be implemented by a component (for example, a chip or a circuit) in the UE. Methods and operations implemented by a DC may alternatively be implemented by a component (for example, a chip or a circuit) in the DC.

The foregoing mainly describes the solutions provided in embodiments of this application from a perspective of interaction between apparatuses. It may be understood that, to implement the foregoing functions, each apparatus like a transmit end device or a receive end device includes a corresponding hardware structure and/or software module for executing each function. A person skilled in the art may be aware that, in this application, units and algorithm steps with reference to the examples described in embodiments disclosed in this specification can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional modules may be performed on a transmit end device or a receive end device based on the foregoing method examples. For example, division into each functional module may be performed based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. An example in which each functional module is obtained through division based on each corresponding function is used below for description.

FIG. 10 is a block diagram of a communication apparatus according to an embodiment of this application. The communication apparatus 1000 shown in FIG. 10 includes a transceiver unit 1010 and a processing unit 1020. The transceiver unit 1010 may communicate with the outside, and the processing unit 1020 is configured to process data. The transceiver unit 1010 may also be referred to as a communication interface or a communication unit.

Optionally, the transceiver unit 1010 may include a sending unit and a receiving unit. The sending unit is configured to perform a sending operation in the foregoing method embodiments. The receiving unit is configured to perform a receiving operation in the foregoing method embodiments.

It should be noted that the communication apparatus 1000 may include the sending unit, but does not include the receiving unit. Alternatively, the communication apparatus 1000 may include the receiving unit, but does not include the sending unit. This may be specifically determined depending on whether the foregoing solutions performed by the communication apparatus 1000 include a sending action and a receiving action.

Optionally, the communication apparatus 1000 may further include a storage unit. The storage unit may be configured to store instructions and/or data. The processing unit 1020 may read the instructions and/or the data in the storage unit.

In a design, the communication apparatus 1000 may be configured to perform actions performed by the terminal device in the foregoing method embodiments. The communication apparatus 1000 may be a terminal device, may be a chip or a circuit in the terminal device, or may be a logical module or software that can implement all or some functions of the terminal device. This is not limited in this application.

Specifically, the communication apparatus 1000 may be a terminal device. The transceiver unit 1010 is configured to perform a receiving or sending operation of the terminal device (for example, the UE) in the foregoing method embodiments, and the processing unit 1020 is configured to perform an internal processing operation of the terminal device (for example, the UE) in the foregoing method embodiments.

In a possible implementation:

The transceiver unit 1010 is configured to: receive a paging message, where the paging message includes a first identifier and a second identifier, the first identifier indicates a target data bearer type in at least two data bearer types, the second identifier indicates a terminal device, the at least two data bearer types include an end-to-end bearer and a multi-node bearer, and each node in the multi-node bearer supports processing on data transmitted on the multi-node bearer; and send a first request message, where the first request message is used to request to perform access, the first request message includes a third identifier, and the third identifier indicates the target bearer type; and
the processing unit 1020 is configured to set up, based on the first identifier, a data bearer corresponding to the target data bearer type.

In another possible implementation, the communication apparatus 1000 may be a RAN or an access management network element. The transceiver unit 1010 is configured to perform a receiving or sending operation of the RAN or the access management network element in the foregoing method embodiments. The processing unit 1020 is configured to perform an internal processing operation of the RAN or the access management network element in the foregoing method embodiments.

In still another possible implementation, the communication apparatus 1000 may be a device including a DC. Alternatively, the communication apparatus 1000 may be a component configured in a DC, for example, a chip in the DC. In this case, the transceiver unit 1010 may be an interface circuit, a pin, or the like. Specifically, the interface circuit may include an input circuit and an output circuit, and the processing unit 1020 may include a processing circuit.

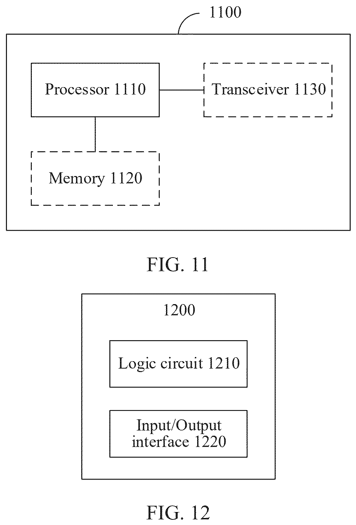

As shown in FIG. 11, an embodiment of this application further provides a communication apparatus 1100. The communication apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, so that the methods in the foregoing method embodiments are performed.

Optionally, the communication apparatus 1100 includes one or more processors 1110.

Optionally, as shown in FIG. 11, the communication apparatus 1100 may further include the memory 1120.

Optionally, the communication apparatus 1100 may include one or more memories 1120.

Optionally, the memory 1120 and the processor 1110 may be integrated, or separately disposed.

Optionally, as shown in FIG. 11, the communication apparatus 1100 may further include a transceiver 1130 and/or a communication interface. The transceiver 1130 and/or the communication interface are/is configured to receive and/or send a signal. For example, the processor 1110 is configured to control the transceiver 1130 and/or the communication interface to receive and/or send the signal.

Optionally, a component configured to implement a receiving function in the transceiver 1130 may be considered as a receiving module, and a component configured to implement a sending function in the transceiver 1130 may be considered as a sending module. That is, the transceiver 1130 includes a receiver and a transmitter. The transceiver sometimes may also be referred to as a transceiver machine, a transceiver module, a transceiver circuit, or the like. The receiver sometimes may also be referred to as a receiver machine, a receiving module, a receiving circuit, or the like. The transmitter sometimes may also be referred to as a transmitter machine, a transmitter, a transmitting module, a transmitting circuit, or the like.

In a possible implementation, the communication apparatus 1100 is configured to implement an operation performed by the terminal device (the UE) in the foregoing method embodiments. For example, the processor 1110 is configured to implement an operation performed internally by the terminal device in the foregoing method embodiments, and the transceiver 1130 is configured to implement a receiving or sending operation performed by the terminal device in the foregoing method embodiments.

In another possible implementation, the communication apparatus 1100 is configured to implement an operation performed by the DC in the foregoing method embodiments. For example, the processor 1110 is configured to implement an operation performed internally by the DC in the foregoing method embodiments, and the transceiver 1130 is configured to implement a receiving or sending operation performed by the DC in the foregoing method embodiments.

In another possible implementation, the communication apparatus 1100 is configured to implement an operation performed by the RAN or the access management network element in the foregoing method embodiments. For example, the processor 1110 is configured to implement an operation performed internally by the RAN or the access management network element in the foregoing method embodiments, and the transceiver 1130 is configured to implement a receiving or sending operation performed by the RAN or the access management network element in the foregoing method embodiments.

Specific processes in which the modules perform the foregoing corresponding steps have been described in detail in the foregoing method embodiments. For brevity, details are not described herein again.

As shown in FIG. 12, an embodiment of this application further provides a communication apparatus 1200. The communication apparatus 1200 includes a logic circuit 1210 and an input/output interface (input/output interface) 1220.

The logic circuit 1210 may be a processing circuit in the communication apparatus 1200. The logic circuit 1210 may be coupled and connected to a storage unit, and invoke instructions in the storage unit, so that the communication apparatus 1200 can implement the methods and functions in embodiments of this application. The input/output interface 1220 may be an input/output circuit in the communication apparatus 1200, and outputs information processed by the communication apparatus 1800, or inputs to-be-processed data or signaling information into the communication apparatus 1800 for processing.

In a solution, the communication apparatus 1200 is configured to implement an operation performed by the terminal device (for example, the UE) in the foregoing method embodiments. For example, the logic circuit 1210 is configured to implement a processing-related operation performed by the terminal device (for example, the UE) in the foregoing method embodiments. The input/output interface 1220 is configured to implement a sending-related and/or receiving-related operation performed by the terminal device (for example, the UE) in the foregoing method embodiments.

In another solution, the communication apparatus 1200 is configured to implement an operation performed by the DC in the foregoing method embodiments. For example, the logic circuit 1210 is configured to implement a processing-related operation performed by the DC in the foregoing method embodiments. The input/output interface 1220 is configured to implement a sending-related and/or receiving-related operation performed by the DC in the foregoing method embodiments.

In another solution, the communication apparatus 1200 is configured to implement an operation performed by the RAN or the access management network element in the foregoing method embodiments. For example, the logic circuit 1210 is configured to implement a processing-related operation performed by the RAN or the access management network element in the foregoing method embodiments. The input/output interface 1220 is configured to implement a sending-related and/or receiving-related operation performed by the RAN or the access management network element in the foregoing method embodiments.

Specific processes in which the modules perform the foregoing corresponding steps have been described in detail in the foregoing method embodiments. For brevity, details are not described herein again.

An embodiment of this application further provides a computer-readable storage medium. The computer-readable storage medium stores computer instructions used to implement the method performed by the terminal device (for example, UE), the DC, the access management network element, or the RAN in the foregoing method embodiments.

For example, when the computer program is executed by a computer, the computer can implement the method performed by the terminal device (for example, UE), the DC, the access management network element, or the RAN in the foregoing method embodiments.

An embodiment of this application further provides a computer program product including instructions. When the instructions are executed by a computer, the computer is caused to implement the method performed by the terminal device (for example, UE), the DC, the access management network element, or the RAN in the foregoing method embodiments.

An embodiment of this application further provides a communication system. The communication system includes the terminal device (for example, UE), the DC, the access management network element, and the RAN in the foregoing embodiments.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The data control apparatus DC and the data control apparatus in the foregoing apparatus embodiments correspond to the data control apparatus DC in the method embodiments, and a corresponding module or unit performs a corresponding step. For example, a communication unit (a transceiver) performs a receiving or sending step in the method embodiments, and a processing unit (a processor) may perform another step other than sending and receiving. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data groups (for example, data from two components interacting with another component in a local system, a distributed system, and/or across a network such as the Internet interacting with other systems by using the signal).

A person of ordinary skill in the art may be aware that, units and algorithm steps with reference to the examples described in embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit described above, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and there may be other division manners during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a paging message, wherein the paging message comprises a first identifier and a second identifier, the first identifier indicates a target data bearer type in at least two data bearer types, the second identifier indicates a terminal device, the at least two data bearer types comprise an end-to-end bearer and a multi-node bearer, and each node in the multi-node bearer supports on-path computation on data transmitted on the multi-node bearer;
sending a first request message, wherein the first request message is used to request to perform access, the first request message comprises a third identifier, and the third identifier indicates the target bearer type; and
setting up, based on the first identifier, a data bearer corresponding to the target data bearer type.

2. The method according to claim 1, wherein that the first identifier indicates the target data bearer type in the at least two data bearer types comprises:
the first identifier indicates a paging cause, the paging cause comprises voice paging, data paging, and a data service, and the target data bearer type corresponds to the paging cause, wherein
when the paging cause is the data service, the target bearer type is the multi-node bearer.

3. The method according to claim 2, wherein that the third identifier indicates the target bearer type comprises:
the third identifier indicates an access cause, and the access cause corresponds to the paging cause, wherein when the paging cause is the data service, the access cause is a called data service.

4. The method according to any one of claims 1 to 3, wherein when the target bearer type is the multi-node bearer, setting up, based on the first identifier, the data bearer corresponding to the target data bearer type comprises:
receiving a second request message, wherein the second request message is used to request a first data service, the terminal device supports providing of the first data service, and the second request message comprises type information of the first data service;
receiving a third request message, wherein the third request message is used to request to set up a first multi-node bearer, and the first multi-node bearer is used to transmit data of the first data service; and
setting up the first multi-node bearer based on the type information of the first data service.

5. The method according to any one of claims 1 to 4, wherein before receiving the paging message, the method further comprises:
sending a capability registration message, wherein the capability registration message indicates a data service capability of the terminal device, and the capability registration message is non-access stratum NAS signaling, or the capability registration message is radio resource control RRC signaling.

6. The method according to any one of claims 1 to 5, wherein the second identifier is a device identifier of the terminal device, or the second identifier is a group identifier of the terminal device.

7. The method according to claim 6, wherein when the second identifier is the group identifier of the terminal device, before receiving the paging message, the method further comprises:
receiving a first message, wherein the first message comprises the second identifier.

8. The method according to any one of claims 3 to 7, wherein the second request message comprises a fourth identifier, and the fourth identifier is a task identifier of the first data service.

9. A communication method, comprising:
receiving a fourth request message, wherein the fourth request message is used to request at least one first terminal device to provide a first data service, the fourth request message comprises a second identifier, and the second identifier indicates the at least one first terminal device;
sending a paging message in response to the fourth request message, wherein the paging message comprises a first identifier and the second identifier, the first identifier indicates a target data bearer type in at least two data bearer types, the at least two data bearer types comprise an end-to-end bearer and a multi-node bearer, and each node in the multi-node bearer supports on-path computation on data transmitted on the multi-node bearer;
receiving a first request message, wherein the first request message is used to request to perform access, the first request message comprises a third identifier, and the third identifier indicates the target bearer type; and
setting up, based on the first identifier, a data bearer corresponding to the target data bearer type.

10. The method according to claim 9, wherein that the first identifier indicates the target data bearer type in the at least two data bearer types comprises:
the first identifier indicates a paging cause, the paging cause comprises voice paging, data paging, and a data service, and the target data bearer type corresponds to the paging cause, wherein
when the paging cause is the data service, the target bearer type is the multi-node bearer.

11. The method according to claim 10, wherein that the third identifier indicates the target bearer type comprises:
the third identifier indicates an access cause, and the access cause corresponds to the paging cause, wherein when the paging cause is the data service, the access cause is a called data service.

12. The method according to any one of claims 9 to 11, wherein when the target bearer type is the multi-node bearer, setting up, by the terminal device based on the first identifier, the data bearer corresponding to the target data bearer type comprises:
sending a second request message to the at least one first terminal device, wherein the second request message is used to request the first data service, the second request message comprises type information of the first data service, the type information of the first data service is used to set up a first multi-node bearer, and the first multi-node bearer is used to transmit data of the first data service; and
receiving a second response message, wherein the second response message is used to determine to provide the first data service.

13. The method according to any one of claims 9 to 12, wherein before receiving the fourth request message, the method further comprises:
receiving at least one first capability registration message, wherein the at least one capability registration message indicates a data service capability of at least one terminal device, the at least one terminal device comprises the at least one first terminal device, and the first capability registration message is non-access stratum NAS signaling or radio resource control RRC signaling; and
sending at least one second capability registration message to a data control function DC, wherein the second capability registration message indicates the data service capability of the at least one terminal device.

14. The method according to any one of claims 9 to 13, wherein the second identifier is a device identifier of each first terminal device, or the second identifier is a group identifier of the at least one first terminal device.

15. The method according to claim 14, wherein when the second identifier is the group identifier of the first terminal device, the fourth request message comprises a fifth identifier, and the fifth identifier indicates a quantity of the at least one first terminal device.

16. The method according to claim 15, wherein the method further comprises:
performing one of the following operations based on the fifth identifier and a quantity of terminal devices that complete access:
sending a first response message, wherein the first response message is used to reject the access;
when the fourth request message is received by an access network device RAN, sending, by the RAN, a fifth request message, wherein the fifth request message is used to request service access, and the fifth request message comprises the third identifier; and
when the fourth request message is received by an access management network element, performing, by the access management network element, the access.

17. The method according to any one of claims 12 to 16, wherein the method further comprises:
starting a timer when sending the paging message;
if the paging message expires, determining, based on a quantity of first terminal devices that determine to provide the first data service and the quantity of the at least one first terminal device, whether to resend the paging message.

18. A communication apparatus, wherein the communication apparatus comprises a unit or a module configured to perform the method according to any one of claims 1 to 8 or claims 9 to 17.

19. A communication apparatus, comprising:
a processor, wherein the processor is coupled to a memory; and
the processor is configured to execute a computer program stored in the memory, to cause the communication apparatus to perform the communication method according to any one of claims 1 to 8, claims 9 to 17, or claims 18 to 23.

20. A communication apparatus, comprising:
a processor and an interface circuit, wherein
the interface circuit is configured to receive code instructions and transmit the code instructions to the processor; and
the processor is configured to execute the code instructions to perform the method according to any one of claims 1 to 8 or claims 9 to 17.

21. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 8 or claims 9 to 17.

22. A computer-readable storage medium, wherein the computer-readable storage medium comprises a computer program or instructions, and when the computer program or the instructions are executed on a computer, the computer is caused to perform the communication method according to any one of claims 1 to 8 or claims 9 to 17.
